(19) Europäisches Patentamt

European Patent Office

Office européen des brevets

(11) **EP 1 431 330 B1**

(12) **EUROPÄISCHE PATENTSCHRIFT**

(45) Veröffentlichungstag und Bekanntmachung des Hinweises auf die Patenterteilung:
**09.11.2005 Patentblatt 2005/45**

(51) Int Cl.$^7$: **C08G 77/26**, C08K 5/544

(21) Anmeldenummer: **03029220.5**

(22) Anmeldetag: **18.12.2003**

(54) **Organopolysiloxanzusammensetzungen und deren Einsatz in bei Raumtemperatur vernetzbaren niedermoduligen Massen**

Polysiloxane compositions and their use in room temperature curable low modulus compositions.

Compositions d'organopolysiloxanes et leur application dans les compositions à faible module et durcissables à température ambiante

(84) Benannte Vertragsstaaten:
**BE DE FR GB NL**

(30) Priorität: **19.12.2002 DE 10259613**

(43) Veröffentlichungstag der Anmeldung:
**23.06.2004 Patentblatt 2004/26**

(73) Patentinhaber: **Wacker-Chemie GmbH**
**81737 München (DE)**

(72) Erfinder:
 • **Scheim, Uwe, Dr.**
 **01640 Coswig (DE)**
 • **Ziche, Wolfgang, Dr.**
 **01665 Diera-Zehren (DE)**

(74) Vertreter: **Budczinski, Angelika et al**
 **c/o Wacker-Chemie GmbH,**
 **Hanns-Seidel-Platz 4**
 **81737 München (DE)**

(56) Entgegenhaltungen:
 EP-A- 0 885 915    US-A- 4 495 331
 US-A- 6 090 904

 • PATENT ABSTRACTS OF JAPAN Bd. 0123, Nr. 12 (C-523), 24. August 1988 (1988-08-24) & JP 63 083167 A (TORAY SILICONE CO LTD), 13. April 1988 (1988-04-13) & DATABASE WPI Derwent Publications Ltd., London, GB; AN 1988-142747 & JP 63 083167 A (TORAY SILICONE CO. LTD.) 13. April 1988 (1988-04-13)

**Beschreibung**

Die Erfindung betrifft Organopolysiloxanzusammensetzungen, deren Herstellung sowie deren Einsatz in bei Raumtemperatur vernetzbaren niedermoduligen Massen, insbesondere solchen, die unter Abspaltung von Alkoholen vernetzen.

Unter Ausschluss von Wasser lagerfähige, bei Zutritt von Wasser bei Raumtemperatur zu Elastomeren vulkanisierende Einkomponenten-Siliconkautschukmischungen (RTV1) sind bekannt. Diese Produkte werden in großen Mengen zum Beispiel als Fugendichtmassen in der Bauindustrie eingesetzt. Die Basis dieser RTV1-Mischungen sind Polydiorganosiloxane, die entweder durch OH-Gruppen oder durch Silylgruppen, die hydrolysierbare Gruppen tragen, terminiert sind. Durch die Kettenlänge der Polymere können wesentliche Eigenschaften der RTV1-Mischungen beeinflusst werden. Insbesondere der sogenannte Modul, das ist der Spannungswert bei 100% Dehnung eines ausgehärteten Probekörpers, lässt sich durch die Kettenlänge regulieren. Vor allem für Fugendichtmassen ist es erwünscht, dass dieser Modul niedrig ist, damit möglichst wenig Kräfte auf die Fugenflanken einwirken. Aus ökonomischen und technischen Gründen steht jedoch für die Produktion von RTV1-Mischungen nur eine begrenzte Palette von Polymerkettenlängen zur Verfügung. Insbesondere die für sehr niedermodulige Dichtstoffe erforderlichen großen Kettenlängen führen zu sehr hohen Viskositäten der Polymere, so dass solche Produkte nur schwer handhabbar sind. Es ist daher erwünscht, derartige Polymere aus leicht handhabbaren Polymeren mit kürzeren Kettenlängen und daher niedrigeren Viskositäten im Zuge der Herstellung von RTV-Massen aus Standardpolymeren zu erzeugen.

Zur Erhöhung der Viskosität der Polysiloxane und damit der Erniedrigung des Spannungswerts daraus hergestellter RTV1-Kautschuke können längere Polymere aus kürzeren durch Kettenverlängerung hergestellt werden. Bekannt ist, dass dazu difunktionelle Silane oder Siloxane verwendet werden können, die eine ausreichend hohe Reaktivität besitzen müssen. So werden in US-A 5,110,967 Si-N heterocyclische Silane beschrieben, die jedoch bedingen, dass bei der Formulierung von RTV-Massen spezielle Vernetzer nötig sind. Verbindungen wie Bisacetamidosilane (siehe z.B. US-A 5,290,826), Bisacetoxysilane (siehe z.B. DE-A 12 95 834) oder Bisaminosilane (siehe z.B. EP-A 74 001) setzen bei der Vulkanisation gesundheitlich bedenkliche bzw. korrosive Spaltprodukte frei. Bevorzugt ist deshalb sehr häufig Alkohol als Spaltprodukt, wobei für eine schnelle Reaktion mit silanolendständigen Siloxanen die in US-A 5,300,612 und US-A 5,470,934 beschriebenen Dialkoxysilane bzw. -siloxane ungeeignet sind. Das gleiche gilt für die in DE-A 198 55 619 beschriebenen Alkoxysilane mit zwei Alkoxygruppen, die keine Kettenverlängerung bewirken.

Darüber hinaus ist bekannt, $\alpha$-Aminomethyldialkoxymethylsilane, wie zum Beispiel N,N-Dibutylaminomethylmethyldiethoxysilan, für eine Kettenverlängerung zu benutzen. Hierzu sei beispielsweise auf JP-A 63083167 verwiesen. Dabei findet zwar zunächst eine schnelle Reaktion mit den hydroxyterminierten Polysiloxanen statt, aber das resultierende Polymer wird bei der Verwendung in RTV-Massen in der Gegenwart von immer vorhandenen, aktiven Wasserstoff enthaltenden Stoffen, wie etwa Alkohol, wieder abgebaut. Das führt dazu, dass entweder die Kettenverlängerung wieder rückgängig gemacht und damit unwirksam ist oder gar das Polymer soweit geschädigt wird, dass die RTV1-Massen nicht mehr vulkanisieren.

Ein weiteres Problem von RTV1-Massen ist deren Stabilität über einen längeren Lagerzeitraum. Insbesondere bei RTV1-Massen, die durch Abspaltung von Alkoholen aushärten, ist es besonders schwierig, lagerstabile Produkte zu erhalten. Es gibt dazu mehrere Lösungsansätze. Ein Ansatz ist der, alle OH-haltigen Verbindungen aus den Mischungen durch sogenannte Scavenger abzufangen. Ein Typ derartiger Scavenger sind Isocyanate (vgl. US-A 4,495,331). Diese reagieren mit den OH-haltigen schädlichen Komponenten zu für die Lagerstabilität unschädlichen Urethanen. Dazu ist es jedoch erforderlich, dass die Isocyanate in einer wirksamen Menge eingesetzt werden, das heißt, es muss mindestens die stöchiometrisch notwendige Menge zur Umsetzung aller OH-haltigen Verbindungen zugesetzt werden. Da dies in praktischen Mischungen normalerweise nicht genau bekannt ist, setzt man sogar einen deutlichen Überschuss an Scavenger ein, um sicher zu sein, dass auch wirklich alle OH-haltigen Komponente umgesetzt werden.

Eine weitere Methode besteht darin, stabilisierend wirkende Komponenten wie zum Beispiel Phosphorverbindungen zuzusetzen, die mit den normalerweise als Härtungskatalysator eingesetzten Organozinnverbindungen Komplexe ergeben (vgl. DE-A 101 21 514).

Gegenstand der Erfindung sind Organopolysiloxanzusammensetzungen erhältlich durch Umsetzung von

(a) im wesentlichen linearen, beidseitig mit Si-gebundenen Hydroxygruppen terminierten Organopolysiloxanen,
(b) gegebenenfalls Weichmachern,
(c) mindestens einem Kettenverlängerer der Formel

$$R^1_{\ 2}NCR^6_{\ 2}SiR^1(OR^2)_2 \qquad\qquad (I)$$

und/oder deren Teilhydrolysate, wobei

$R^1$ gleich oder verschieden sein kann und einen einwertigen, gegebenenfalls substituierten Kohlenwasserstoffrest bedeutet,

$R^2$ gleich oder verschieden sein kann und einen einwertigen, gegebenenfalls substituierten Kohlenwasserstoffrest bedeutet und $R^6$ gleich oder verschieden sein kann und Wasserstoffatom oder einen einwertigen, gegebenenfalls substituierten Kohlenwasserstoffrest bedeutet,

(d) Isocyanate

(e) gegebenenfalls Silanen der Formel

$$R^3Si(OR^4)_3 \qquad\qquad (II)$$

und/oder deren Teilhydrolysate, wobei

$R^3$ eine für $R^1$ angegebene Bedeutung hat,

$R^4$ gleich oder verschieden sein kann und einen einwertigen, gegebenenfalls substituierten Kohlenwasserstoffrest oder einen Rest -C(=O)-$R^5$ oder -N=C$R^5_2$ bedeutet und

$R^5$ gleich oder verschieden sein kann und eine für $R^2$ angegebene Bedeutung hat,

und

(f) gegebenenfalls Katalysatoren zur Beschleunigung der Reaktion zwischen Silan (e) mit Si-OH-Gruppen.

Im Rahmen der vorliegenden Erfindung sollen von dem Begriff Organopolysiloxane sowohl polymere, oligomere wie auch dimere Siloxane mitumfasst werden, bei denen ein Teil der Siliciumatome auch durch andere Gruppen als Sauerstoff, wie etwa über -N- oder -C-, miteinander verbunden sein können.

Bevorzugt handelt es sich bei den hydroxyterminierten Organopolysiloxanen (a) um solche der Formel

$$HO(R_2SiO)_nH \qquad\qquad (III),$$

wobei

R gleich oder verschieden sein kann und eine für $R^1$ angegebene Bedeutung hat und

n eine ganze Zahl von 10 bis 2000 ist, bevorzugt von 100 bis 1000.

Beispiele für Reste R, $R^1$, $R^2$, $R^3$, $R^4$, $R^5$ und $R^6$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, und Dodecylreste, wie der n-Dodecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenylrest; Alkarylreste, wie o-, m-, p-Tolylreste; und Aralkylreste, wie der Benzylrest, der α- und der β-Phenylethylrest.

Weitere Beispiele für die Gruppe -O$R^4$ in Formel (II) sind Acetoxy- und Ethylmethylketoximogruppen.

Beispiele für substituierte Reste R, $R^1$, $R^2$, $R^3$, $R^4$, $R^5$ und $R^6$ sind Halogenalkylreste, wie der 3,3,3-Trifluorn-propylrest, der 2,2,2',2',2'-Hexafluor-isopropylrest, der Heptafluorisopropylrest und Halogenarylreste, wie der o-, m- und p-Chlorphenylrest, sowie alle oben genannten Reste, die mit Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Acryloxygruppen, Methacryloxygruppen, Hydroxygruppen und Halogengruppen substituiert sein können.

Bevorzugt handelt es sich bei den Resten R, $R^1$, $R^2$, $R^3$, $R^4$ und $R^5$ jeweils unabhängig voneinander um einwertige, gegebenenfalls mit Heteroatomen wie Stickstoffatom, Halogenenatom und Sauerstoffatom substituierte Kohlenwasserstoffreste mit 1 bis 12 Kohlenstoffatomen. Bei $R^4$ kann es sich außerdem um Reste der Strukturen -C(=O)-$R^5$ oder -N=C$R^5_2$ handeln mit $R^5$ gleich der obengenannten Bedeutung.

Bevorzugt hat Rest $R^6$ die Bedeutung von Wasserstoffatom oder einem für R oben angegebenen Rest, wobei $R^6$ besonders bevorzugt Wasserstoffatom bedeutet.

Besonders bevorzugt handelt es sich bei den Resten R, $R^3$ und $R^5$ um einen Kohlenwasserstoffrest mit 1 bis 6 Kohlenstoffatomen, insbesondere um einen Methyl-, Ethyl- oder Vinylrest.

Besonders bevorzugt handelt es sich bei den Resten $R^2$ und $R^4$ um einen Alkylrest mit 1 bis 6 Kohlenstoffatomen, insbesondere um den Methyl- oder Ethylrest.

Die erfindungsgemäßen Zusammensetzungen können nun nach beliebigen und an sich bekannten Verfahren hergestellt werden, wie etwa durch einfaches Vermischen der einzelnen Komponenten und reagieren lassen.

Ein weiterer Gegenstand der vorliegenden Erfindung ist ein Verfahren zur Herstellung der erfindungsgemäßen Organopolysiloxanzusammensetzungen, dadurch gekennzeichnet, dass (a) im wesentlichen lineare, beidseitig mit Si-gebundenen Hydroxygruppen terminierte Organopolysiloxane, (b) gegebenenfalls Weichmacher, (c) mindestens ein Kettenverlängerer der Formel (I), (d) Isocyanat, (e) gegebenenfalls Silane der Formel (II) und (f) gegebenenfalls Katalysatoren zur Beschleunigung der Reaktion zwischen Silan (e) mit Si-OH-Gruppen miteinander vermischt und reagieren gelassen werden.

Das erfindungsgemäße Verfahren wird bei Temperaturen von bevorzugt 5 bis 100°C, besonders bevorzugt bei Raumtemperatur, also etwa 20°C, und einem Druck der umgebenden Atmosphäre, also etwa 900 bis 1100 hPa, durchgeführt.

Nach einer bevorzugten Verfahrensweise des erfindungsgemäßen Verfahrens werden in einem

ersten Schritt

dihydroxyterminierte Organopolysiloxane (a) mit gegebenenfalls eingesetztem Weichmacher (b) gemischt und mit Silanen (c) der Formel (I) und/oder deren Teilhydrolysate umgesetzt und nach einer Reaktionszeit in einem

zweiten Schritt

Isocyanat (d) zugegeben und gegebenenfalls in einem

dritten Schritt

durch Zugabe von Silanen (e) der Formel (II) und/oder deren Teilhydrolysate sowie gegebenenfalls Katalysator (f) noch vorhandenen Si-OH-Gruppen, bevorzugt vollständig, umgesetzt.

Nach einer weiteren bevorzugten Verfahrensweise des erfindungsgemäßen Verfahrens wird eine Mischung des Kettenverlängerers (c) mit dem Isocyanat (d), gegebenenfalls dem Silan (e) und gegebenenfalls dem Katalysator (f) zu einer Mischung aus dihydroxyterminierten Organopolysiloxanen (a) mit gegebenenfalls eingesetztem Weichmacher (b) gegeben.

Bevorzugt handelt es sich bei dem erfindungsgemäß eingesetzten Bestandteil (a) um Organopolysiloxane der Formel (III), insbesondere um $\alpha,\omega$-Dihydroxypolydimethylsiloxane, mit Viskositäten von 100 bis 500 000 mPas, besonders bevorzugt mit Viskositäten von 20 000 bis 120 000 mPas, jeweils bei 25°C.

Bevorzugt handelt es sich bei dem gegebenenfalls eingesetzten Weichmacher (b) um Silikonöle, die von Komponente (a) verschieden sind, mit Viskositäten zwischen 5 und 10 000 mPas bei 25°C und Kohlenwasserstoffgemische mit Viskositäten zwischen 1 und 20 mPas bei 40°C, wobei Silikonöle, insbesondere Dimethylpolysiloxane mit Trimethylsilylendgruppen, mit Viskositäten zwischen 10 und 1000 mPas besonders bevorzugt sind.

Falls bei dem erfindungsgemäßen Verfahren Weichmacher (b) eingesetzt werden, handelt es sich um Mengen von bevorzugt 5 bis 100 Gewichtsteilen, besonders bevorzugt 15 bis 70 Gewichtsteilen, jeweils bezogen auf 100 Gewichtsteile Komponente (a).

Beispiele für die erfindungsgemäß eingesetzten Kettenverlängerer (c) sind $(CH_3-(CH_2)_3)_2N-CH_2-Si(CH_3)(OCH_2CH_3)_2$, $(H_3C-CH_2)_2N-CH_2-Si(CH_3)(OCH_2CH_3)_2$, $(CH_3-(CH_2)_3)_2N-CH_2-Si(CH_3)(OCH_3)_2$, $(H_3C-CH_2)_2N-CH_2-Si(CH_3)(OCH_3)_2$, $((CH_3)_2CH)_2N-CH_2-Si(CH_3)(OCH_2CH_3)_2$, $((CH_3)_2CH)_2N-CH_2-Si(CH_3)(OCH_3)_2$, $(CH_3CH_2(CH_3)CH)_2N-CH_2-Si(CH_3)(OCH_2CH_3)_2$, $(CH_3CH_2(CH_3)CH)_2N-CH_2-Si(CH_3)(OCH_3)_2$, $C_6H_5(CH_3)N-CH_2-Si(CH_3)(OCH_2CH_3)_2$, $C_6H_5(CH_3)N-CH_2-Si(CH_3)(OCH_3)_2$, $C_6H_{11}(CH_3)N-CH_2-Si(CH_3)(OCH_2CH_3)_2$, $C_6H_{11}(CH_3)N-CH_2-Si(CH_3)(OCH_3)_2$ sowie deren Teilhydrolysate.

Bevorzugt handelt es sich bei den erfindungsgemäß eingesetzten Kettenverlängerern (c) um $(CH_3-(CH_2)_3)_2N-CH_2-Si(CH_3)(OCH_2CH_3)_2$, $(H_3C-CH_2)_2N-CH_2-Si(CH_3)(OCH_2CH_3)_2$, $(CH_3-(CH_2)_3)_2N-CH_2-Si(CH_3)(OCH_3)_2$ und $(H_3C-CH_2)_2N-CH_2-Si(CH_3)(OCH_3)_2$ sowie deren Teilhydrolysate, wobei $(H_3C-CH_2)_2N-CH_2-Si(CH_3)(OCH_2CH_3)_2$ und $(H_3C-CH_2)_2N-CH_2-Si(CH_3)(OCH_3)_2$ besonders bevorzugt sind.

Zur Bereitung der erfindungsgemäßen Zusammensetzungen werden Kettenverlängerer (c) bevorzugt in solchen Mengen zur Komponente (a) eingesetzt, dass das molare Verhältnis $Si-OH/OR^2$ bevorzugt größer oder gleich 1 ist, wobei $R^2$ die oben dafür angegebene Bedeutung hat.

Beispiele für erfindungsgemäß eingesetzte Isocyanate (d) sind Cyclohexylisocyanat, Isophorondiisocyanat oder Hexamethylendiisocyanat.

Die molare Menge an erfindungsgemäß eingesetztem Isocyanat (d) beträgt bevorzugt von 10 bis 200 %, besonders bevorzugt 70 bis 150%, jeweils bezogen auf die eingesetzte molare Menge an Kettenverlängerer (c).

Beispiele für die erfindungsgemäß gegebenenfalls eingesetzten Silane (e) sind Organyltrialkoxysilane, wie Methyltrimethoxysilan, Ethyltrimethoxysilan, n-Propyltrimethoxysilan und Vinyltrimethoxysilan, Organyltrioximosilane, wie Methyltris(methylethylketoximo)silan und Vinyltris(methylethylketoximo)silan, oder Alkyltriacetoxysilane, wie Methyltriacetoxysilan und E-thyltriacetoxysilan, sowie die Teilhydrolysate der vorgenannten Silane, wobei Organyltrialkoxysilane und/oder deren Teilhydrolysate bevorzugt sind.

Besonders bevorzugt handelt es sich bei den erfindungsgemäß gegebenenfalls eingesetzten Silanen (e) um Methyltrimethoxysilan und Vinyltrimethoxysilan.

Falls zur Bereitung der erfindungsgemäßen Zusammensetzungen (e) Silane und/oder deren Teilhydrolysate eingesetzt werden, handelt es sich um Mengen von bevorzugt 1 bis 20 Gewichtsteilen, besonders bevorzugt 5 bis 15 Gewichtsteilen, jeweils bezogen auf 100 Gewichtsteile an eingesetztem Organopolysiloxan (a).

Beispiele für die gegebenenfalls eingesetzten Katalysatoren (f) sind alle Katalysatoren, die auch bisher bei Reaktionen von Si-gebundenen Organyloxy-Gruppen mit Si-OH-Gruppen eingesetzt worden sind.

Bevorzugt handelt es sich bei den im erfindungsgemäßen Verfahren gegebenenfalls eingesetzten Katalysatoren (f) um Metallchelate und Phosphorsäureester, besonders bevorzugt um Titanchelate, Zinkacetylacetonat, 2-Ethylhexylphosphat und Di(2-ethylhexyl)phosphat.

Falls im erfindungsgemäßen Verfahren Katalysatoren (f) eingesetzt werden, handelt es sich um Mengen von bevorzugt 0,0001 bis 5 Gewichtsteilen, besonders bevorzugt 0,001 bis 2 Gewichtsteilen, jeweils bezogen auf 100 Gewichtsteile an eingesetzten hydroxyterminierten Organopolysiloxanen (a).

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Das erfindungsgemäße Verfahren kann als sog. Eintopfreaktion in einem Reaktionsgefäß durchgeführt werden. Es können aber auch die einzelnen Schritte des erfindungsgemäßen Verfahrens separat durchgeführt werden.

Während der erfindungsgemäßen Umsetzung entstehen Spaltprodukt der Formeln $R^2$-OH und gegebenenfalls $R^4$-OH, die in der Reaktionsmasse verbleiben oder nach bekannten Methoden entfernt werden können, wobei $R^2$ und $R^4$ die obengenannte Bedeutung haben.

Insgesamt ergibt sich somit ein Produktionsprozess, der ausschließlich schnelle Reaktionen umfasst, so dass das erfindungsgemäße Verfahren sowohl kontinuierlich als auch diskontinuierlich durchgeführt werden kann.

Das erfindungsgemäße Verfahren hat den Vorteil, dass es schnell und einfach in der Durchführung ist, wobei leicht verfügbare Rohstoffe als Edukte eingesetzt werden.

Ein weiterer Vorteil des erfindungsgemäßen Verfahrens ist, dass die hergestellten Organopolysiloxanmischungen direkt weiterverwendet werden können, z.B. bei der Herstellung von RTV-Massen.

Die erfindungsgemäßen Organopolysiloxanzusammensetzungen haben eine Viskosität von bevorzugt 100 bis 1 000 000 mPa·s, besonders bevorzugt von 100 bis 50 000 mPa·s, insbesondere von 1 000 bis 20 000 mPa·s, jeweils gemessen bei 25°C.

Überraschenderweise wurde gefunden, dass die erfindungsgemäßen Organopolysiloxanzusammensetzungen eine hohe Stabilität hinsichtlich des Polymerabbaus während der Lagerung aufweisen.

Des weiteren können die erfindungsgemäßen Organopolysiloxanzusammensetzungen zur Herstellung von kondensationsvernetzenden Massen eingesetzt werden, ohne dass ein Polymerabbau auftritt.

Die erfindungsgemäßen bzw. erfindungsgemäß hergestellten Organopolysiloxanzusammensetzungen können für alle Zwecke eingesetzt werden, für die auch bisher Organopolysiloxane eingesetzt wurden. Insbesondere eignen sie sich zur Herstellung von bei Raumtemperatur vernetzbaren Massen.

Ein weiterer Gegenstand der vorliegenden Erfindung sind durch Kondensationsreaktion vernetzbare Massen, dadurch gekennzeichnet, dass sie erfindungsgemäße bzw. erfindungsgemäß hergestellte Organopolysiloxanzusammensetzungen enthalten.

Die erfindungsgemäßen vernetzbaren Massen können neben den erfindungsgemäßen Organopolysiloxanzusammensetzungen alle Komponenten enthalten, die auch bisher zur Herstellung von bei Raumtemperatur vernetzbaren Organopolysiloxanmassen, sog. RTV-Massen, eingesetzt wurden. Bei den hydrolysierbaren Gruppen, welche die eingesetzten, an der Vernetzungsreaktion beteiligten Organosiliciumverbindungen aufweisen können, kann es sich um beliebige Gruppen handeln, wie Acetoxy-, Amino-, Aminoxy-, Oximato- und Organyloxygruppen, wie Ethoxyreste, Alkoxyethoxyreste und Methoxyreste, wobei es sich bevorzugt um einkomponentige durch Organyloxygruppen bei Raumtemperatur vernetzbare Massen handelt.

Beispiele für Komponenten, die bei der Bereitung der erfindungsgemäßen RTV-Massen verwendet werden können, sind Kondensationskatalysatoren, verstärkende Füllstoffe, nichtverstärkende Füllstoffe, Pigmente, lösliche Farbstoffe, Riechstoffe, Weichmacher, wie bei Raumtemperatur flüssige, durch Trimethylsiloxygruppen endblockierte Dimethylpolysiloxane oder Phosphorsäureester, Fungicide, harzartige Organopolysiloxane, einschließlich solcher aus $(CH_3)_3SiO_{1/2}$- und $SiO_{4/2}$-Einheiten, rein organische Harze, wie Homo- oder Mischpolymerisate des Acrylnitrils, Styrols, Vinylchlorids oder Propylens, wobei solche rein organischen Harze, insbesondere Mischpolymerisate aus Styrol und n-Butylacrylat, bereits in Gegenwart von in den endständigen Einheiten je eine Si-gebundene Hydroxylgruppe aufweisendem Diorganopolysiloxan durch Polymerisation der genannten Monomeren mittels freier Radikale erzeugt worden sein können, Korrosionsinhibitoren, Polyglykole, die verestert und/oder verethert sein können, Oxidationsinhibitoren, Stabilisatoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit SiC-gebundenen Mercaptoalkylresten, sowie zellenerzeugende Mittel, z.B. Azodicarbonamid. Desgleichen können Haftvermittler, vorzugsweise amino-alkylfunktionelle Silane wie 3-Aminopropyltriethoxysilan, zugegeben werden.

Beispiele für die zur Herstellung der erfindungsgemäßen vernetzbaren Massen gegebenenfalls eingesetzten Stabilisatoren sind saure Phosphorsäureester, Phosphonsäuren und saure Phosphonsäureester.

Falls zur Herstellung der erfindungsgemäßen vernetzbaren Massen Stabilisatoren eingesetzt werden, handelt es sich um Mengen von bevorzugt 0,01 bis 1 Gewichtsteile, bezogen auf 100 Gewichtsteile an zur Bereitung der Komponente (A) eingesetzten hydroxyterminierten Organopolysiloxanen (a).

Besonders bevorzugt werden diese Stabilisatoren bei erfindungsgemäßen Massen eingesetzt, die über Organyloxysilane vernetzen.

Zur Bereitung der erfindungsgemäßen vernetzbaren Massen werden vorzugsweise Kondensationskatalysatoren eingesetzt. Dabei kann es sich um beliebige Kondensationskatalysatoren handeln, die auch bisher in unter Ausschluss von Wasser lagerfähigen, bei Zutritt von Wasser bei Raumtemperatur zu Elastomeren vernetzenden Massen vorliegen konnten.

Beispiele für solche Kondensationskatalysatoren sind organische Verbindungen von Zinn, Zink, Zirkonium, Titan und Aluminium. Bevorzugt unter diesen Kondensationskatalysatoren sind Butyltitanate und organische Zinnverbindungen, wie Di-n-butylzinndiacetat, Di-n-butylzinndilaurat und Umsetzungsprodukte von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesen Umsetzungsprodukten alle Valenzen der Zinnatome durch Sauerstoffatome der Gruppierung $\equiv$SiOSn$\equiv$ bzw. durch SnCgebundene, einwertige organische Reste abgesättigt sind.

Vorzugsweise enthalten die erfindungsgemäßen RTV-Massen Füllstoffe. Beispiele für Füllstoffe sind nicht verstärkende Füllstoffe, also Füllstoffe mit einer BET-Oberfläche von bis zu 20 m$^2$/g, wie Quarz, Diatomeenerde, Calciumsilikat, Zirkoniumsilikat, Zeolithe, Metalloxidpulver wie Aluminium-, Titan-, Eisen- oder Zinkoxide bzw. deren Mischoxide, Bariumsulfat, gemahlenes Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 20 m$^2$/g wie pyrogen hergestellte Kieselsäure, gefällte Kieselsäure, gefälltes Calciumcarbonat, Ruß wie Furnace- und Acetylenruß und Silicium-Aluminium-Mischoxide großer BET-Oberfläche; faserförmige Füllstoffe wie Asbest sowie Kunststofffasern.

Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Bei alleiniger Verwendung von verstärkender Kieselsäure als Füllstoff können transparente RTV-Massen hergestellt werden.

Bei den zur Bereitung der erfindungsgemäßen vernetzbaren Massen eingesetzten Komponenten kann es sich jeweils um eine Art einer solchen Komponente wie auch um ein Gemisch aus mindestens zwei Arten einer jeweiligen Komponente handeln.

Bevorzugt handelt es sich bei den erfindungsgemäßen vernetzbaren Massen um solche, die

(A) erfindungsgemäße Organopolysiloxanzusammensetzungen,
(B) gegebenenfalls Vernetzer mit mindestens drei hydrolysierbaren Resten,
(C) Kondensationskatalysatoren und
(D) Füllstoff

enthalten.

Falls zur Bereitung der Organopolysiloxanzusammensetzung (A) kein Silan (e) eingesetzt wurde, wird zur Herstellung der erfindungsgemäßen vernetzbaren Massen Vernetzer (B) verwendet.

Besonders bevorzugt handelt es sich bei den erfindungsgemäßen vernetzbaren Massen um solche, die aus

(A) 100 Gewichtsteilen erfindungsgemäße Organopolysiloxanzusammensetzung,
(B) 0 bis 10 Gewichtsteilen Silane mit mindestens drei Alkoxyresten und/oder deren Teilhydrolysate,
(C) 0,01 bis 3 Gewichtsteilen Kondensationskatalysatoren,
(D) 0,5 bis 200 Gewichtsteilen Füllstoff und
(E) 0,1 bis 5 Gewichtsteilen Zusatzstoffe, ausgewählt aus Pigmenten, Farbstoffen, Riechstoffen, Korrosionsinhibitoren, Polyglykolen, die verestert oder verethert sein können, Oxidationsinhibitoren, Hitzestabilisatoren, Stabilisatoren, Lösungsmittel und organofunktionellen Silanen als Haftvermittler, bestehen, mit der Maßgabe, dass die vernetzbaren Massen Vernetzer (B) enthalten, falls zur Bereitung der Organopolysiloxanzusammensetzung (A) kein Silan (e) eingesetzt wird.

Die erfindungsgemäßen Massen können auf beliebige und bisher bekannte Art und Weise hergestellt werden, wie z.B. durch einfaches Vermischen der einzelnen Komponenten, wobei die als Komponente (A) eingesetzte erfindungsgemäße Organopolysiloxanzusammensetzung in situ hergestellt werden kann.

Für die Vernetzung der erfindungsgemäßen RTV-Massen reicht der übliche Wassergehalt der Luft aus. Die Vernetzung kann, falls erwünscht, auch bei höheren oder niedrigeren Temperaturen als Raumtemperatur, z.B. bei -5 bis 10°C oder bei 30 bis 50°C, durchgeführt werden. Die Vernetzung wird bevorzugt bei einem Druck der umgebenden Atmosphäre durchgeführt, also etwa 900 bis 1100 hPa.

Ein weiterer Gegenstand der vorliegenden Erfindung sind Formkörper, hergestellt durch Vernetzung der erfindungsgemäßen Massen.

Die erfindungsgemäßen vernetzbaren Massen können für alle Zwecke eingesetzt werden, für die auch bisher durch Kondensationsreaktion bei Raumtemperatur vernetzbare Massen eingesetzt worden sind. Sie eignen sich somit ausgezeichnet beispielsweise als Abdichtungsmassen für Fugen, einschließlich senkrecht verlaufender Fugen, und ähnlichen Leerräumen, z.B. von Gebäuden, Land-, Wasser- und Luftfahrzeugen, oder als Klebstoffe oder Verkittungsmassen, z.B. im Fensterbau oder bei der Herstellung von Vitrinen, sowie zur Herstellung von Schutzüberzügen oder von gummielastischen Formkörpern sowie für die Isolierung von elektrischen oder elektronischen Vorrichtungen. Insbesondere geeignet sind die erfindungsgemäßen RTV-Massen als niedermodulige Abdichtungsmassen für Fugen mit möglicher hoher Bewegungsaufnahme.

In den nachstehend beschriebenen Beispielen beziehen sich alle Angaben von Teilen mit Prozentsätzen, falls nicht anders angegeben, auf das Gewicht. Des Weiteren beziehen sich alle Viskositätsangaben auf eine Temperatur von 25°C, falls nicht anders angegeben. Sofern nicht anders angegeben, werden die nachstehenden Beispiele bei einem Druck der umgebenden Atmosphäre, also bei etwa 1000 hPa, und Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Die Shore-A-Härte wird nach DIN (Deutsche Industrie Norm) 53505-87 bestimmt.

Die Reißdehnung, Zugfestigkeit und Spannung bei 100% Dehnung, wird nach DIN 53504-85S2 bestimmt.

## Beispiel 1

500 Gewichtsteile eines $\alpha,\omega$-Dihydroxy-Dimethylpolysiloxans mit einer Viskosität von 1000 mPa·s, 500 Gewichtsteile eines trimethylsilylendständigen Dimethylpolysiloxans mit einer Viskosität von 100 mPa·s werden mit 4 Gewichtsteilen eines Silans der Formel $(C_2H_5)_2N\text{-}CH_2\text{-}Si(CH_3)(OCH_2CH_3)_2$ in einem Planetenmischer vermischt und die Viskosität $\eta^1$ bestimmt und in Tabelle 1 wiedergegeben. Diese Polymermischung wird mit 2 Gewichtsteilen Cyclohexylisocyanat versetzt, und nach 5 Minuten werden 30 Gewichtsteile Methyltrimethoxysilan und 0,15 Gewichtsteile Zinkacetylacetonat zur Katalyse zugegeben. Der Verlauf der Viskosität wird gemessen und in Tabelle 1 als $\eta$ wiedergegeben.

## Vergleichsbeispiel 1

500 Gewichtsteile eines $\alpha,\omega$-Dihydroxy-Dimethylpolysiloxans mit einer Viskosität von 1000 mPa·s, 500 Gewichtsteile eines trimethylsilylendständigen Dimethylpolysiloxans mit einer Viskosität von 100 mPa·s werden mit 4 Gewichtsteilen eines Silans der Formel $(CH_3CH_2)_2N\text{-}CH_2\text{-}Si(CH_3)(OCH_2CH_3)_2$ in einem Planetenmischer vermischt und die Viskosität $\eta^1$ bestimmt und in Tabelle 1 wiedergegeben. Danach werden 30 Gewichtsteile Methyltrimethoxysilan und 0,15 Gewichtsteile Zinkacetylacetonat zur Katalyse zugegeben. Der Verlauf der Viskosität wird gemessen und in Tabelle 1 als $\eta$ wiedergegeben.

Tabelle 1:

| Viskosität in mPa·s | | |
|---|---|---|
| | Beispiel 1 | Vergleichsbeispiel 1 |
| $\eta^1$ | 1300 | 560 |
| $\eta$ nach 2 Stunden | 990 | 480 |
| $\eta$ nach 2 Tagen | 960 | 200 |
| $\eta$ nach 3 Tagen | 860 | 170 |

## Beispiel 2

In einem Planetenmischer werden 1400 g eines $\alpha,\omega$-Dihydroxy-Dimethylpolysiloxans mit einer Viskosität von 80000 mPa·s, 600 g eines trimethylsilylendständigen Dimethylpolysiloxans mit einer Viskosität von 100 mPa·s mit 1,2 g N,N-Diethylaminomethylmethyldiethoxysilan vermischt und 5 Minuten gerührt. Diese Polymermischung wird mit 1,0 g Cyclohexylisocyanat versetzt, und nach 5 Minuten wird eine Mischung aus 50 g Methyltrimethoxysilan, 25 g Vinyltrimethoxysilan und 0,6 g Zinkacetylacetonat zugegeben. Nach 24 Stunden wird durch Zugabe von 16 g 3-Aminopropyltrimethoxysilan, 43 g des Haftvermittlers "AMS 70" (käuflich erhältlich bei der Wacker-Chemie GmbH, Deutschland), 220 g einer pyrogenen Kieselsäure mit einer Oberfläche nach BET von 150 m$^2$/g und 8 g eines Zinnkatalysators, der hergestellt wird durch Umsetzung von Di-n-butylzinndiacetat und Tetraethoxysilan, sowie 3 g Octylphosphonsäure eine RTV1-Mischung hergestellt. Die so erhaltene Masse wird in einer Dicke von 2 mm auf einer PE-Folie aufgetragen und bei 23°C/50 % rel. Luftfeuchtigkeit gelagert. Nach 7 Tagen Aushärtung wurden folgende mechanische Kennwerte gemessen:

Zugfestigkeit: 1,01 MPa
Reißdehnung: 760%
Spannung bei 100% Dehnung: 0,25 MPa
Shore-A-Härte: 17

Zur Ermittlung der Lagerstabilität wurde die nicht ausgehärtete RTV1-Masse 3 Tage bei 100°C gelagert. Die anschließend an einem Vulkanisat gemessenen mechanischen Kennwerte waren unverändert.

**Beispiel 3**

In einem Planetenmischer werden 1400 g eines $\alpha,\omega$-Dihydroxy-Dimethylpolysiloxans mit einer Viskosität von 80000 mPa·s, 600 g eines trimethylsilylendständigen Dimethylpolysiloxans mit einer Viskosität von 100 mPa·s mit einer Mischung bestehend aus 1,2 g N,N-Diethylaminomethylmethyldiethoxysilan, 1,0 g Cyclohexylisocyanat, 50 g Methyltrimethoxysilan, 25 g Vinyltrimethoxysilan und 0,6 g Zinkacetylacetonat vermischt. Nach 24 Stunden wird durch Zugabe von 16 g 3-Aminopropyltrimethoxysilan, 43 g des Haftvermittlers "AMS 70" (käuflich erhältlich bei der Wakker-Chemie GmbH, Deutschland), 220 g einer pyrogenen Kieselsäure mit einer Oberfläche nach BET von 150 m$^2$/g und 8 g eines Zinnkatalysators, der hergestellt wird durch Umsetzung von Din-butylzinndiacetat und Tetraethoxysilan, sowie 3 g Octylphosphonsäure eine RTV1-Mischung hergestellt. Die so erhaltene Masse wird in einer Dicke von 2 mm auf einer PE-Folie aufgetragen und bei 23°C/50 % rel. Luftfeuchtigkeit gelagert. Nach 7 Tagen Aushärtung wurden folgende mechanische Kennwerte gemessen:

Zugfestigkeit: 1,08 MPa
Reißdehnung: 780%
Spannung bei 100% Dehnung: 0,28 MPa
Shore-A-Härte: 17

Zur Ermittlung der Lagerstabilität wurde die nichtausgehärtete RTV1-Masse 3 Tage bei 100°C gelagert. Die anschließend an einem Vulkanisat gemessenen mechanischen Kennwerte waren unverändert.

**Vergleichsbeispiel 2**

Die in Beispiel 3 beschriebene Arbeitsweise wird wiederholt mit der Abänderung, dass auf den Zusatz des Cyclohexylisocyanats verzichtet wurde. Es ergaben sich folgende mechanische Kennwerte:

Zugfestigkeit: 1,22 MPa
Reißdehnung: 580%
Spannung bei 100% Dehnung: 0,38 MPa
Shore-A-Härte: 22

**Vergleichsbeispiel 3**

Die in Beispiel 3 beschriebene Arbeitsweise wird wiederholt mit der Abänderung, dass auf den Zusatz des N,N-Diethylaminomethylmethyldiethoxysilans verzichtet wurde. Es ergaben sich folgende mechanische Kennwerte:

Zugfestigkeit: 1,47 Mpa
Reißdehnung: 511%
Spannung bei 100% Dehnung: 0,42 MPa
Shore-A-Härte: 26

**Beispiel 4**

In einem Planetenmischer werden 500 Gewichtsteile eines $\alpha,\omega$-Dihydroxy-Dimethylpolysiloxans mit einer Viskosität von 80000 mPa·s, 300 Gewichtsteile eines trimethylsilylendständigen Dimethylpolysiloxans mit einer Viskosität von 100 mPa·s mit 0,1 Gewichtsteilen eines Silans der Formel $(CH_3CH_2)_2N$-$CH_2$-$Si(CH_3)(OCH_2CH_3)_2$ vermischt und 5 Minuten gerührt. Diese Polymermischung wird mit 0,07 Gewichtsteilen Cyclohexylisocyanat versetzt, und nach 5 Minuten werden 30 Gewichtsteile Ethyltriacetoxysilan zugegeben. Mit 85 Gewichtsteilen einer pyrogenen Kieselsäure mit einer Oberfläche nach BET von 150 $m^2$/g und 0,01 Gewichtsteilen Dibutylzinndiacetat wird eine standfeste RTV-Zubereitung compoundiert. Die Masse wird in einer Dicke von 2 mm auf einer PE-Folie aufgetragen und bei 23°C/50 % rel. Luftfeuchtigkeit gelagert. Die Hautbildungszeit beträgt 10 Minuten, die Masse härtet innerhalb von 24 Stunden durch und ergibt ein elastisches niedermoduliges Vulkanisat.

**Beispiel 5**

In einem Planetenmischer werden 500 Gewichtsteile eines $\alpha,\omega$-Dihydroxy-Dimethylpolysiloxans mit einer Viskosität von 80000 mPa·s, 300 Gewichtsteile eines trimethylsilylendständigen Dimethylpolysiloxans mit einer Viskosität von 100 mPa·s mit 0,2 Gewichtsteilen eines Silans der Formel $(CH_3CH_2)_2N$-$CH_2$-$Si(CH_3)(OCH_2CH_3)_2$ vermischt und 5 Minuten gerührt. Diese Polymermischung wird mit 0,15 Gewichtsteilen Cyclohexylisocyanat versetzt. Anschließend wird die so erhaltene Organopolysiloxanzusammensetzung mit 30 Gewichtsteilen Methyltris(methylethylketoximo) silan, 10 Gewichtsteilen Vinyltris(methylethylketoximo)silan und 5 Gewichtsteilen 3-Aminopropyltrimethoxysilan versetzt. Mit 85 Gewichtsteilen einer pyrogenen Kieselsäure mit einer Oberfläche nach BET von 150 $m^2$/g und 0,1 Gewichtsteilen Dibutylzinndiacetat wird eine standfeste RTV-Zubereitung compoundiert. Die Masse wird in einer Dicke von 2 mm auf einer PE-Folie aufgetragen und bei 23°C/50 % rel. Luftfeuchtigkeit gelagert. Die Hautbildungszeit beträgt 10 Minuten, die Masse härtet innerhalb von 24 Stunden durch und ergibt ein elastisches niedermoduliges Vulkanisat.

**Patentansprüche**

1.   Organopolysiloxanzusammensetzungen erhältlich durch Umsetzung von

(a) im wesentlichen linearen, beidseitig mit Si-gebundenen Hydroxygruppen terminierten Organopolysiloxanen,
(b) gegebenenfalls Weichmachern,
(c) mindestens einem Kettenverlängerer der Formel

$$R^1{}_2NCR^6{}_2SiR^1(OR^2)_2 \qquad (I)$$

und/oder deren Teilhydrolysate, wobei
$R^1$ gleich oder verschieden sein kann und einen einwertigen, gegebenenfalls substituierten Kohlenwasserstoffrest bedeutet,
$R^2$ gleich oder verschieden sein kann und einen einwertigen, gegebenenfalls substituierten Kohlenwasserstoffrest bedeutet und $R^6$ gleich oder verschieden sein kann und Wasserstoffatom oder einen einwertigen, gegebenenfalls substituierten Kohlenwasserstoffrest bedeutet,
(d) Isocyanate,
(e) gegebenenfalls Silanen der Formel

$$R^3Si(OR^4)_3 \qquad (II)$$

und/oder deren Teilhydrolysate, wobei
$R^3$ eine für $R^1$ angegebene Bedeutung hat,
$R^4$ gleich oder verschieden sein kann und einen einwertigen, gegebenenfalls substituierten Kohlenwasserstoffrest oder einen Rest -C(=O)-$R^5$ oder -N=$CR^5{}_2$ bedeutet und
$R^5$ gleich oder verschieden sein kann und eine für $R^2$ angegebene Bedeutung hat,
und
(f) gegebenenfalls Katalysatoren zur Beschleunigung der Reaktion zwischen Silan (e) mit Si-OH-Gruppen.

**2.** Organopolysiloxanzusammensetzung gemäß Anspruch 1 oder 2, **dadurch gekennzeichnet, dass** sie eine Viskosität von 100 bis 1 000 000 mPa·s, gemessen bei 25°C, aufweisen.

**3.** Verfahren zur Herstellung der Organopolysiloxanzusammensetzungen gemäß einem oder mehreren der Ansprüche 1 bis 3, **dadurch gekennzeichnet, dass** (a) im wesentlichen lineare, beidseitig mit Si-gebundenen Hydroxygruppen terminierte Organopolysiloxane, (b) gegebenenfalls Weichmacher, (c) mindestens ein Kettenverlängerer der Formel (I), (d) Isocyanat, (e) gegebenenfalls Silane der Formel (II) und (f) gegebenenfalls Katalysatoren zur Beschleunigung der Reaktion zwischen Silan (e) mit Si-OH-Gruppen miteinander vermischt und reagieren gelassen werden.

**4.** Verfahren gemäß Anspruch 4, **dadurch gekennzeichnet, dass** in einem
ersten Schritt
dihydroxyterminierte Organopolysiloxane (a) mit gegebenenfalls eingesetztem Weichmacher (b) gemischt und mit Silanen (c) der Formel (I) und/oder deren Teilhydrolysate umgesetzt und nach einer Reaktionszeit in einem
zweiten Schritt
Isocyanat (d) zugegeben und gegebenenfalls in einem
dritten Schritt
durch Zugabe von Silanen (e) der Formel (II) und/oder deren Teilhydrolysate sowie gegebenenfalls Katalysator (f) noch vorhandenen Si-OH-Gruppen, bevorzugt vollständig, umgesetzt werden.

**5.** Verfahren gemäß Anspruch 4, **dadurch gekennzeichnet, dass** eine Mischung des Kettenverlängerers (c) mit dem Isocyanat (d), gegebenenfalls dem Silan (e) und gegebenenfalls dem Katalysator (f) zu einer Mischung aus dihydroxyterminierten Organopolysiloxanen (a) mit gegebenenfalls eingesetztem Weichmacher (b) gegeben werden.

**6.** Verfahren nach einem oder mehreren der Ansprüche 4 bis 6, **dadurch gekennzeichnet, dass** die molare Menge an Isocyanat (d) 10 bis 200 %, bezogen auf die eingesetzte molare Menge an Kettenverlängerer (c), beträgt.

**7.** Durch Kondensationsreaktion vernetzbare Massen, **dadurch gekennzeichnet, dass** sie Organopolysiloxanzusammensetzungen gemäß einem oder mehreren der Ansprüche 1 bis 3 oder hergestellt nach einem oder mehreren der Ansprüche 4 bis 7 enthalten.

**8.** Vernetzbare Massen gemäß Anspruch 8, **dadurch gekennzeichnet, dass** es sich um solche handelt, die

(A) Organopolysiloxanzusammensetzungen gemäß einem oder mehreren der Ansprüche 1 bis 3 oder hergestellt nach einem oder mehreren der Ansprüche 4 bis 7,
(B) gegebenenfalls Vernetzer mit mindestens drei Organyloxyresten,
(C) Kondensationskatalysatoren und
(D) Füllstoff

enthalten.

**9.** Formkörper, hergestellt durch Vernetzung der Massen gemäß Anspruch 8 oder 9.

**Claims**

**1.** Organopolysiloxane compositions obtainable by reaction of

(a) essentially linear organopolysiloxanes which are terminated at both ends by Si-bonded hydroxy groups,
(b) if desired plasticizers,
(c) at least one chain extender of the formula

$$R^1_2NCR^6_2SiR^1(OR^2)_2 \qquad\qquad (I)$$

and/or partial hydrolysates thereof, where

R$^1$ may be identical or different and are each a monovalent, substituted or unsubstituted hydrocarbon radical, R$^2$ may be identical or different and are each a monovalent, substituted or unsubstituted hydrocarbon radical and

R$^6$ may be identical or different and are each hydrogen or a monovalent, substituted or unsubstituted hydrocarbon radical,

(d) isocyanates,

(e) if desired silanes of the formula

$$R^3Si(OR^4)_3 \qquad\qquad (II)$$

and/or their partial hydrolysates, where

R$^3$ is as defined for R$^1$,

R$^4$ may be identical or different and are each a monovalent, substituted or unsubstituted hydrocarbon radical or a -C(=O)-R$^5$ or -N=CR$^5_2$ radical and

R$^5$ may be identical or different and each have one of the meanings given for R$^2$,

and

(f) if desired catalysts for accelerating the reaction of silane (e) with Si-OH groups.

2. Organopolysiloxane composition according to Claim 1 or 2 **characterized in that** it has a viscosity of from 100 to 1 000 000 mPa·s, measured at 25°C.

3. Process for preparing the organopolysiloxane compositions according to one or more of Claims 1 to 3, **characterized in that** (a) essentially linear organopolysiloxanes which are terminated at both ends by Si-bonded hydroxy groups, (b) if desired plasticizers, (c) at least one chain extender of the formula (I), (d) isocyanates, (e) if desired silanes of the formula (II) and (f) if desired catalysts for accelerating the reaction of silane (e) with Si-OH groups are mixed with one another and allowed to react.

4. Process according to Claim 4, **characterized in that**, in a
   first step,
   dihydroxy-terminated organopolysiloxanes (a) are mixed with any plasticizer (b) used and reacted with silanes (c) of the formula (I) and/or their partial hydrolysates and after a reaction time, in a
   second step,
   isocyanate (d) is added and, if desired, in a
   third step,
   Si-OH groups still present are reacted, preferably completely, by addition of silanes (e) of the formula (II) and/or their partial hydrolysates and, if desired, catalyst (f).

5. Process according to Claim 4, **characterized in that** a mixture of the chain extender (c) with the isocyanate (d) and if desired the silane (e) and if desired the catalyst (f) is added to a mixture of dihydroxy-terminated organopolysiloxanes (a) with any plasticizer (b) used.

6. Process according to one or more of Claims 4 to 6, **characterized in that** the molar amount of isocyanate (d) is from 10 to 200%, based on the molar amount of chain extender (c) used.

7. Compositions which can be crosslinked by means of condensation reactions, **characterized in that** they comprise organopolysiloxane compositions according to one or more of Claims 1 to 3 or prepared according to one or more of Claims 4 to 7.

8. Crosslinkable compositions according to Claim 8 **characterized in that** they comprise

   (A) organopolysiloxane compositions according to one or more of Claims 1 to 3 or prepared according to one or more of Claims 4 to 7,
   (B) if desired crosslinkers having at least three organooxy radicals,
   (C) condensation catalysts and
   (D) filler.

9. Shaped bodies produced by crosslinking of the compositions according to Claim 8 or 9.

**Revendications**

1. Compositions d'organopolysiloxane pouvant être obtenues par transformation

   (a) d'organopolysiloxanes essentiellement linéaires, terminés des deux côtés par des groupes hydroxy liés par Si,
   (b) le cas échéant de plastifiants,
   (c) d'au moins un agent d'allongement de chaîne de formule

   $$R^1_2NCR^6_2SiR^1(OR^2)_2 \qquad\qquad (I)$$

   et/ou leurs hydrolysats partiels, où
   $R^1$ peut être identique ou différent et signifie un radical hydrocarboné monovalent, le cas échéant substitué,
   $R^2$ peut être identique ou différent et signifie un radical hydrocarboné monovalent, le cas échéant substitué et
   $R^6$ peut être identique ou différent et signifie un atome d'hydrogène ou un radical hydrocarboné monovalent, le cas échéant substitué,
   (d) d'isocyanates
   (e) le cas échéant de silanes de formule

   $$R^3Si(OR^4)_3 \qquad\qquad (II)$$

   et/ou leurs hydrolysats partiels, où
   $R^3$ a une signification indiquée pour $R^1$,
   $R^4$ peut être identique ou différent et signifie un radical hydrocarboné monovalent, le cas échéant substitué ou un radical $-C(=O)-R^5$ ou $-N=CR^5_2$ et
   $R^5$ peut être identique ou différent et a une signification indiquée pour $R^2$,
   et
   (f) le cas échéant de catalyseurs pour accélérer la réaction entre le silane (e) et les groupes Si-OH.

2. Composition d'organopolysiloxane selon la revendication 1 ou 2, **caractérisée en ce qu'**elle présente une viscosité de 100 à 1 000 000 mPa.s, mesurée à 25°C.

3. Procédé pour la préparation des compositions d'organopolysiloxane selon l'une ou plusieurs des revendications 1 à 3, **caractérisé en ce qu'**on mélange et qu'on laisse réagir (a) des organopolysiloxanes essentiellement linéaires, terminés des deux côtés par des groupes hydroxy liés par Si, (b) le cas échéant des plastifiants, (c) au moins un agent d'allongement de chaîne de formule (I), (d) un isocyanate, (e) le cas échéant des silanes de formule (II) et (f) le cas échéant des catalyseurs pour accélérer la réaction entre le silane (e) et les groupes Si-OH.

4. Procédé selon la revendication 4, **caractérisé en ce que**, dans une première étape, on mélange des organopolysiloxanes (a) terminés par dihydroxy, avec le plastifiant (b) éventuellement utilisé et on transforme avec des silanes (c) de formule (I) et/ou leurs hydrolysats partiels et, après un certain temps de réaction, dans une deuxième étape, on ajoute l'isocyanate (d) et, le cas échéant, dans une troisième étape, on transforme, par addition de silanes (e) de formule (II) et/ou leurs hydrolysats partiels ainsi que le cas échéant du catalyseur (f), les groupes Si-OH encore présents, de préférence complètement.

5. Procédé selon la revendication 4, **caractérisé en ce qu'**on ajoute un mélange de l'agent d'allongement de chaîne (c) avec l'isocyanate (d), le cas échéant le silane (e) et le cas échéant le catalyseur (f) à un mélange d'organopolysiloxanes (a) terminés par dihydroxy avec le plastifiant (b) le cas échéant utilisé.

6. Procédé selon l'une ou plusieurs des revendications 4 à 6, **caractérisé en ce que** la quantité molaire de l'isocyanate (d) est de 10 à 200% par rapport à la quantité molaire d'agent d'allongement de chaîne (c) utilisée.

**7.** Masses réticulables par une réaction de condensation, **caractérisées en ce qu'**elles contiennent les compositions d'organopolysiloxane selon l'une ou plusieurs des revendications 1 à 3 ou préparées selon l'une ou plusieurs des revendications 4 à 7.

**8.** Masses réticulables selon la revendication 8, **caractérisées en ce qu'**il s'agit de masses qui contiennent

(A) des compositions d'organopolysiloxane selon l'une ou plusieurs des revendications 1 à 3 ou préparées selon l'une ou plusieurs des revendications 4 à 7,
(B) le cas échéant des réticulants avec au moins trois radicaux organyloxy,
(C) des catalyseurs de condensation et
(D) des charges.

**9.** Corps façonnés, préparés par la réticulation des masses selon la revendication 8 ou 9.